# EUROPEAN PATENT SPECIFICATION

(11) **EP 1 097 294 B1**
(45) Date of publication and mention of the grant of the patent: **12.05.2004**
(21) Application number: 99935249.5
(22) Date of filing: 07.07.1999
(51) Int. Cl.: F01L 1/26, F01N 3/20

(54) **INTERNAL COMBUSTION ENGINE**
BRENNKRAFTMASCHINE
MOTEUR A COMBUSTION INTERNE

(30) Priority: 10.07.1998 SE 9802510
(43) Date of publication of application: 09.05.2001
(73) Proprietor: SAAB AUTOMOBILE AKTIEBOLAG, 461 80 Trollhättan (SE)
(72) Inventor: LEJON, Svante, S-176 71 Järfälla (SE)
(74) Representative: Platt, Timothy Nathaniel
(86) International application number: PCT/SE1999/001239
(87) International publication number: WO 2000/003127

(56) References cited:
- DE-A1- 4 344 277
- PATENT ABSTRACTS OF JAPAN & JP 06 200 745 A (NISSAN MOTOR CO LTD) 19 July 1994
- PATENT ABSTRACTS OF JAPAN & JP 07 011 940 A (NISSAN MOTOR CO LTD) 13 January 1995
- PATENT ABSTRACTS OF JAPAN vol. 16, no. 523 (M-1331) 27 October 1992 & JP 04 194 310 A (NISSAN MOTOR CO LTD) 14 July 1992
- PATENT ABSTRACTS OF JAPAN vol. 015, no. 168 (M-1107) 26 April 1991 & JP 03 033 410 A (MITSUBISHI MOTORS CORP) 13 February 1991

## Description

### Technical field

The invention relates to an internal combustion engine according to the precharacterizing clause of Patent Claim 1.

### State of the art

In internal combustion engines, it is now common to have at least two exhaust valves per cylinder in order to be better capable of handling the gas exchange in the cylinder than with only one exhaust valve. The exhaust valves usually work synchronously, but it is also known, for example from GB 2 105 286, to make the exhaust valves open with a certain mutual time lag so as to divide the exhaust-gas flow in a special manner. According to said specification, exhaust gases are fed to an exhaust-gas turbine via one of the exhaust valves when the piston is at its bottom dead-centre, so as to utilize high exhaust-gas pressure, while another exhaust valve opens later and conducts the remaining exhaust gases, the pressure of which is now low, past the exhaust-gas turbine.

A problem exists, however, in that, in connection with cold-starting, the exhaust-gas turbine causes a drop in temperature which delays heating of the catalyst which is to control emissions.

An internal combustion engine according to the precharacterizing part of claim 1 is known for example from DE 4 344 277 A.

### The object of the invention

The object of the invention is to produce an internal combustion engine which makes possible improved emission control, in particular when cold-starting. Another object of the invention is to maintain good engine performance in other respects.

### Description of the invention

The object of the invention is achieved by means of an internal combustion engine as indicated in the introduction, with the features stated in Patent Claim 1.

By being capable of keeping given exhaust valves closed during a selected period of operation, it is possible to control an otherwise divided exhaust-gas flow so that it is at least periodically conducted a different way than is normal. This can advantageously be utilized in connection with starting while the engine is still cold. In this way, a small catalyst can be fed with all exhaust gases on starting and thus be heated and become effective rapidly. When the engine is hot, the previously closed valves are opened so that a normal division of the exhaust-gas flow is obtained.

In order for the exhaust valves which can open while the others are kept closed to be capable of handling the exhaust-gas flow, they have a greater degree of opening during this period of operation than during other operation, and they can moreover open earlier during this period of operation than during other operation.

Further features and advantages of the solution according to the invention emerge from the description and the other patent claims.

The invention is described in greater detail below with reference to exemplary embodiments shown in the drawing.

### Description of the figures

In the drawing:
Fig. 1 shows diagrammatically an internal combustion engine according to the invention,
Fig. 2 shows an engine made for turbocharging,
Fig. 3 shows a valve diagram for the exhaust valves for an engine according to Figs 1 and 2 in the cold state,
Fig. 4 corresponds to Fig. 3 but shows a hot engine instead, and
Figs 5 and 6 show different arrangements for valve actuation.

### Description of exemplary embodiments

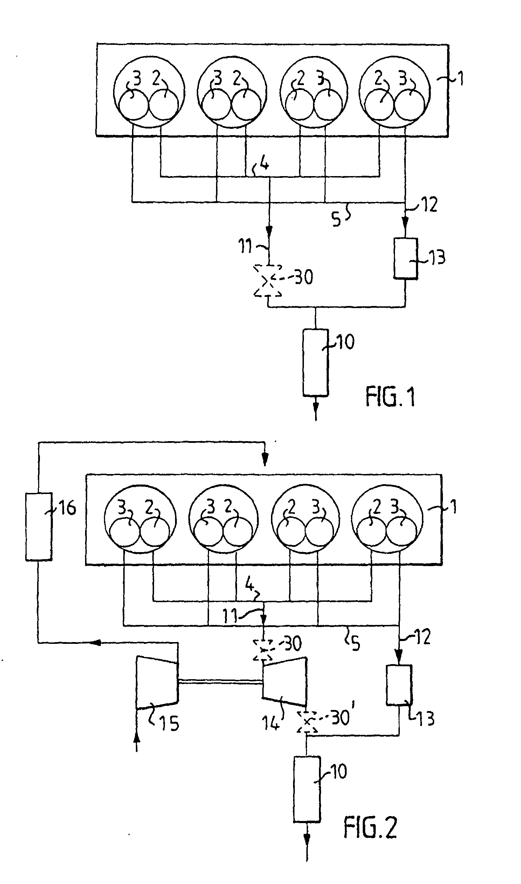

Fig. 1 shows diagrammatically a multi-cylinder internal combustion engine 1 according to the invention. The cylinders of the engine each have at least two exhaust valves 2 and 3. From the first exhaust valves 2 of the cylinders, exhaust gas is led out to a first exhaust manifold 4 common to the cylinders. From the second exhaust valves 3 of the cylinders, exhaust gas is led out to a second exhaust manifold 5 common to the cylinders. The first exhaust manifold 4 is connected to a first catalyst 10 via a first exhaust pipe 11, and the second exhaust manifold 5 is connected to the first catalyst 10 via a second exhaust pipe 12 in which there is a second catalyst 13. One or more silencer(s) (not shown) is or are located downstream of the first catalyst 10 in the conventional manner.

Fig. 2 shows the engine in Fig. 1 equipped for supercharging by means of a compressor driven via an exhaust-driven turbine. The exhaust-gas turbine 14 is in this case connected into the exhaust pipe 11 and is therefore fed from the first exhaust manifold 4 and the first exhaust valves 2. A compressor 15 driven by the exhaust-gas turbine 14 provides the engine with charge air which is cooled in an intercooler 16 before it is fed into the engine in the conventional manner (not shown in greater detail).

When the engine 1 is started, and as long as it is still cold, the first valves 2 are kept closed and all exhaust-gas discharge is effected via the second valves 3 which feed all the exhaust gases to the second catalyst 13 via the second exhaust manifold 5. In connection with starting, peak power is not required from the engine, for which reason the second catalyst 13 can be dimensioned for a relatively small exhaust-gas flow and be positioned close or very close to the engine. In this way, it can be heated rapidly and achieve good functioning, so that effective emission control is achieved very quickly on starting. During the time that the second catalyst 13 is working, the first catalyst 10 is heated. It is normally serviceable after a period of time of roughly 30 s from starting. As the first catalyst 10 has thus become hot, the first exhaust valves 2 are set in operation so that they can feed exhaust gases out to the first exhaust manifold 4 and on from there to the first catalyst 10. A certain proportion of the exhaust-gas flow can continue to pass through the second catalyst 13 on the way to the first catalyst 10.

In the example according to Fig. 2, the exhaust-gas energy is used to operate an exhaust-gas turbine 14, but the functioning is in other respects the same as for the engine in Fig. 1.

The control of the exhaust valves in each cylinder can be effected in a number of different ways in order to achieve the desired function and the desired ratio between different exhaust-gas flows. A disadvantage of keeping the first exhaust valves closed for a period is that the engine power is limited during this period. This disadvantage is usually small, however, in comparison with the gain in terms of improved emission control.

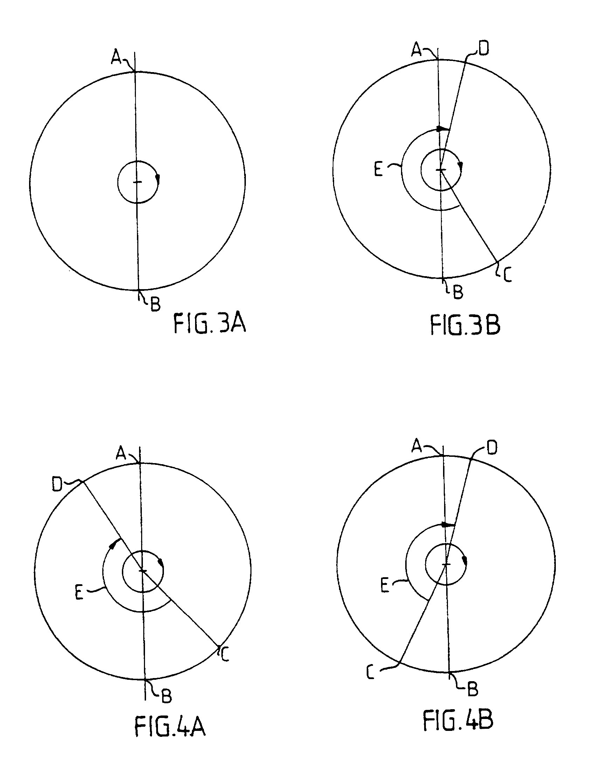

A control of the exhaust valves 2 and 3 suitable for the embodiment according to Fig. 2 is shown in Fig. 3, with the engine cold, and Fig. 4, with the engine hot. In each figure, the left diagram a) represents the first exhaust valve 2, while the right diagram b) represents the second exhaust valve 3. In each diagram, A indicates the top dead centre of the piston, B the bottom dead centre of the piston, C the opening position of the exhaust valve, D the closing position of the exhaust valve and E the open time of the exhaust valve.

As can be seen according to Fig. 3, when the engine is cold, the first exhaust valve 2 (Fig. 3a) is kept closed, while the second exhaust valve 3 (Fig. 3b) opens at C, roughly 30° before the bottom dead centre B and is kept open until D, roughly 15° after the top dead centre A. All exhaust-gas discharge is thus effected via the second exhaust valve 3 during a long open time E, roughly 225°.

When the engine is hot, according to Fig. 4, the first exhaust valve 2 (Fig. 4a) starts functioning and opens at C, roughly 45° before the bottom dead centre B, and is kept open until D, roughly 30° before the top dead centre A. The open time E is thus roughly 195° in this case, but is dependent on the number of cylinders connected to the exhaust manifold. The angular values indicated are only an example for a four-cylinder engine. The second exhaust valve 3 (Fig. 4b) now opens slightly later than previously, at C in fact, roughly 30° after the bottom dead centre B, and is kept open until the same point as previously, namely until D, roughly 15° after the top dead centre A. This division of the open time between the valves 2 and 3 provides an effective pressure feed to the turbine 14, at the same time as low-pressure exhaust gases are conducted past the turbine to the atmosphere via one or more catalyst(s) and silencer(s).

A special advantage of the embodiment according to Fig. 2 is that the major drop in temperature caused by the cold turbine 14 is avoided on starting, and a rapidly activated second catalyst 13 can be used initially while the ordinary, first catalyst 10 is heated. The division of the exhaust stroke also has other advantages, such as, for example, improved emptying of the cylinder.

In order to be capable of handling an adequately large exhaust-gas flow when the engine is cold, it is appropriate if the second exhaust valve can open more, that is to say have a greater lifting movement, when the engine is cold than when the engine is hot.

As the majority of the exhaust-gas passes through the main catalyst at high power levels, the second catalyst 13 can suitably be designed so as to be capable of handling roughly 20-25% of the maximum exhaust-gas flow at full load of the engine. It should still be positioned as close to the engine as possible in order to undergo rapid heating.

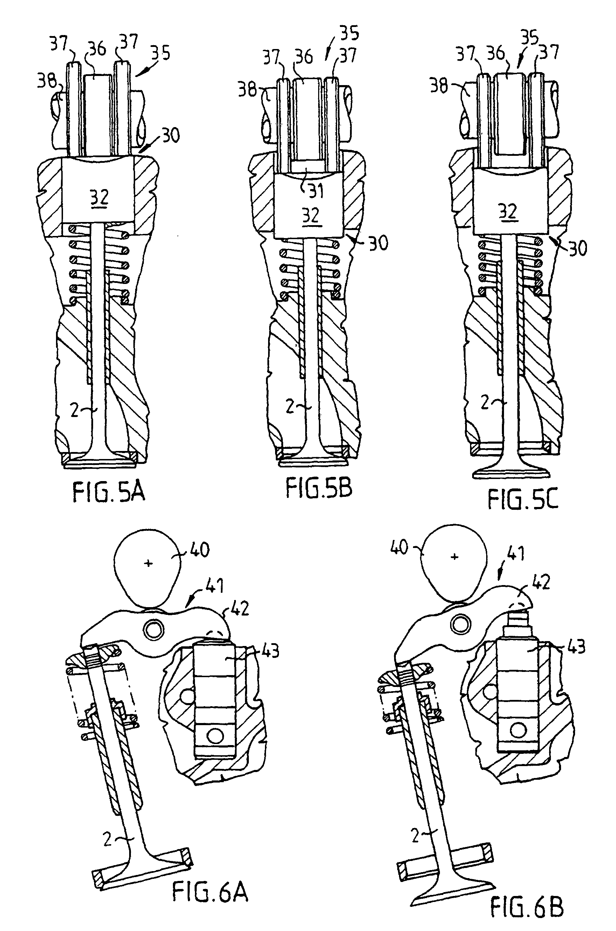

In a conventional engine, use is normally made of separate, single cams on a common camshaft in order to actuate both the exhaust valves 2 and 3 via a valve lifter for each valve. These valves then have fixed valve timings. Adjustability of the exhaust valves 2 and 3 can be achieved in a number of different ways by means of known equipment for the purpose. Examples of possible embodiments for adjustability are shown in Figs 5 and 6.

Fig. 5 shows an arrangement in which an adjustable valve lifter 30 is acted on by a cam member 35 on a camshaft 38. The valve lifter 30 has an inner part 31 and an outer part 32 which can be locked in relation to one another in the axial direction (Figs 5a and 5c) or be movable in relation to one another in the axial direction (Fig. 5b). The cam member 35 consists of a central cam 36 and two outer cams 37 arranged one on each side of the latter.

The functioning is as follows:

In Fig. 5a, the exhaust valve 2 is kept in the closed position by the tops of all the cams 36, 37 being turned upwards, away from the valve lifter 30. In Fig. 5b, the camshaft 38 has been rotated half a revolution, so that the tops of the cams 36, 37 are turned downwards in order to act on the valve lifter 30. This is located here in a position of adjustment in which the outer part 32 is displaceable relative to the inner part 31 which is connected to the valve 3. The result is that the outer cams 37 can displace the outer part 32 relative to the inner part 31 which is acted on by only the central cam 36 and in this case opens the valve 2 slightly.

In Fig. 5c, the camshaft 38 and the cam member 35 are located in the same rotational position as in Fig. 5b, but the inner part 31 and the outer part 32 in the valve lifter 30 are in this case locked in relation to one another. The result is that the cam member 35 pushes the valve lifter 30 down, via the outer cams 37 and the outer part 32 in the valve lifter 30, so that the valve 2 is opened.

The mutual locking between the inner part 31 and the outer part 32 in the valve lifter 30 is regulated hydraulically in the valve lifter, via oil ducts (not shown) associated with the valve lifter. By means of the selection of cam shape and mutual displacement between different cams, the valve can be controlled according to requirements.

Fig. 6 shows an arrangement of another type, in which a cam 40 on a camshaft (not shown in greater detail) acts on an exhaust valve 2 via a contact arm 41, one end of which can be adjusted to different height positions by means of an actuating device 43 positioned in the cylinder head.

In Fig. 6a, the end 42 of the contact arm 41 is located in its lowest position which is selected in such a manner that the valve 2 remains closed when the top of the cam 40 bears against the contact arm 41. In Fig. 6b, on the other hand, the end 42 has been raised by means of the actuating device 43 to a position in which the valve 2 opens when the top of the cam 40 bears against the contact arm 41. The degree of opening of the valve 2 can be varied by means of hydraulically adjusting the end 42 to different height positions. By changing the shape and position of the cam 40, it is also possible to change the opening time and closing time of the valve 2 as required and desired.

The equipment shown in Figs 5 and 6 is marketed by the German company INA Motorenelemente Schaeffler KG and has therefore been described only in outline. Other embodiments are also possible in order to achieve the valve function sought according to the invention.

Instead of keeping the exhaust valves 2 closed for a time after starting, it would also be possible to close their outlet, that is to say the first exhaust pipe 11, by means of a valve which can be opened and closed in order to achieve the desired distribution of the exhaust-gas flow. Examples of such an arrangement are shown in Figs 1 and 2, in which a valve 30 has been mounted in the first exhaust pipe 11. In the arrangement in Fig. 2, the valve 30 can suitably be mounted upstream of the exhaust-gas turbine 14, but positioning 30' downstream of the exhaust-gas turbine 14 is also possible. The valve 30 shown can advantageously be electrically controlled and will of course be in the open position during the major part of the operation of the engine.

## Claims

1. Internal combustion engine with at least two exhaust valves (2, 3) per cylinder, in which at least one first exhaust valve (2) in each cylinder is connected to a first catalyst (10), and in which at least one second exhaust valve (3) in each cylinder is connected to the first catalyst (10) via a second catalyst (13) located upstream of the first catalyst, the first exhaust valves (2) or their outlets being arranged so as to be capable of being kept closed during a selected period of operation of the engine in connection with starting, while the engine is still cold, all exhaust-gas discharge during this period of operation being effected via the second exhaust valves (3), **characterized in that** the second exhaust valves (3) are arranged so as to have a greater degree of opening during the selected period of operation than during other operation.

2. Internal combustion engine according to Claim 1, **characterized in that** the second exhaust valves (3) are arranged so as to open earlier during the selected period of operation than during other operation.

3. Internal combustion engine according to Claim 1 or 2, **characterized in that** the first exhaust valves (2) are arranged so as to open earlier and close earlier than the second exhaust valves (3) during the other operation.

4. Internal combustion engine according to Claim 3, **characterized in that** the first exhaust valves (2) are arranged so as to open before the piston reaches its bottom dead centre during the other operation.

5. Internal combustion engine according to any one of Claims 1-4, **characterized in that** the first exhaust valves (2) are connected via a first exhaust manifold (4) to an exhaust-gas turbine (14) in a turbo-compressor for supercharging the engine.

## Patentansprüche

1. Brennkraftmaschine mit mindestens zwei Auslassventilen (2, 3) pro Zylinder, wobei mindestens ein erstes Auslassventil (2) eines jeden Zylinders mit einem ersten Katalysator (10) verbunden ist und wobei mindestens ein zweites Auslassventil (3) eines jeden Zylinders mit dem ersten Katalysator (10) über einen von diesem stromaufwärts angeordneten zweiten Katalysator (13) verbunden ist, wobei die ersten Auslassventile (2) oder deren Auslässe derart ausgebildet sind, dass sie während eines ausgewählten Zeitraums vorbestimmter Dauer in der Startphase der Maschine, während dessen die Maschine noch kalt ist, geschlossen hält und der gesamte Abgasausstoß während dieses Zeitraums über die zweiten Auslassventile (3) erfolgt, **dadurch gekennzeichnet, dass** die zweiten Auslassventile (3) derart ausgebildet sind, dass ihr Öffnungshub während des ausgewählten Zeitraums größer ist als während des übrigen Betriebs.

2. Brennkraftmaschine nach Anspruch 1, **dadurch gekennzeichnet, dass** die zweiten Auslassventile (3) derart beschaffen sind, dass sie während des ausgewählten Zeitraums früher öffnen als während des übrigen Betriebs.

3. Brennkraftmaschine nach Anspruch 1 oder 2, **dadurch gekennzeichnet, dass** die ersten Auslassventile (2) derart beschaffen sind, dass während des übrigen Betriebs früher öffnen und früher schließen als die zweiten Auslassventile (3).

4. Brennkraftmaschine nach Anspruch 3, **dadurch gekennzeichnet, dass** die ersten Auslassventile (2) derart beschaffen sind, dass sie während des übrigen Betriebs öffnen, bevor der Kolben seinen unteren Totpunkt erreicht.

5. Brennkraftmaschine nach einem der Ansprüche 1 bis 4, **dadurch gekennzeichnet, dass** die ersten Auslassventile (2) über einen ersten Abgaskrümmer (4) mit einer Abgasturbine (14) eines Turbokompressors zur Aufladung der Maschine verbunden sind.

## Revendications

1. Moteur à combustion interne avec au moins deux soupapes d'échappement (2, 3) par cylindre, dans lequel au moins une première soupape d'échappement (2) dans chaque cylindre est reliée à un premier catalyseur (10), et dans lequel au moins une deuxième soupape d'échappement (3) dans chaque cylindre est reliée au premier catalyseur (10) via un deuxième catalyseur (13) situé en amont du premier catalyseur, les premières soupapes d'échappement (2) ou leurs orifices de sortie étant agencé(e)s de manière à être capables de rester fermé(e)s pendant une période de fonctionnement choisie du moteur se rapportant au démarrage, tant que le moteur est froid, toute évacuation de gaz d'échappement pendant cette période de fonctionnement s'effectuant par les deuxièmes soupapes d'échappement (3), **caractérisé en ce que** les deuxièmes soupapes d'échappement (3) sont adaptées pour avoir un plus grand degré d'ouverture pendant la période de fonctionnement choisie que pendant les autres périodes.

2. Moteur à combustion interne selon la revendication 1, **caractérisé en ce que** les deuxièmes soupapes d'échappement (3) sont adaptées pour s'ouvrir plus tôt pendant la période de fonctionnement choisie que pendant les autres périodes.

3. Moteur à combustion interne selon la revendication 1 ou 2, **caractérisé en ce que** les premières soupapes d'échappement (2) sont adaptées pour s'ouvrir plus tôt et se fermer plus tôt que les deuxièmes soupapes d'échappement (3) pendant les autres périodes.

4. Moteur à combustion interne selon la revendication 3, **caractérisé en ce que** les premières soupapes d'échappement (2) sont adaptées pour s'ouvrir avant que le piston n'atteigne son point mort bas pendant les autres périodes.

5. Moteur à combustion interne selon l'une quelconque des revendications 1 à 4, **caractérisé en ce que** les premières soupapes d'échappement (2) sont reliées, via un premier collecteur d'échappement (4), à une turbine (14) dédiée aux gaz d'échappement dans un turbocompresseur destiné à suralimenter le moteur.
